# EUROPEAN PATENT SPECIFICATION

(11) **EP 3 051 036 B1**
(45) Date of publication and mention of the grant of the patent: **06.12.2023**
(21) Application number: 16460002.5
(22) Date of filing: 14.01.2016
(51) Int. Cl.: B32B 3/26, B32B 7/03, B32B 7/08, B32B 21/14, E04C 2/12, B27M 3/00, B32B 21/13

(54) **METHOD OF MANUFACTURING A MULTI-LAYER WOODEN WALL**
VERFAHREN ZUR HERSTELLUNG EINER MEHRSCHICHTIGEN HOLZWANDSTRUKTUR
PROCÉDÉ DE FABRICATION D'UNE PAROI EN BOIS MULTICOUCHE

(30) Priority: 22.01.2015 PL 41103215
(43) Date of publication of application: 03.08.2016
(73) Proprietor: Duraj, Antoni, 34-382 Bystra (PL)
(72) Inventor: Duraj, Antoni, 34-382 Bystra (PL)
(74) Representative: Rygiel, Andrzej

(56) References cited:
- EP-A1- 2 279 839
- EP-A1- 2 492 410
- EP-A2- 1 321 598
- EP-A2- 1 745 899
- EP-A2- 2 316 624
- WO-A1-00/03850
- CH-A5- 692 391
- FR-A1- 2 788 569

## Description

An object of the invention is the method of manufacturing a multi-layer wooden wall of planks arranged crosswise in alternate layers that form a stack, used for making walls with openings for windows and doors and walls without openings used for building houses.

The multi-layer wooden walls are currently manufactured by making the bottom layer of the planks arranged edgewise, on which the next layer is placed crosswise at right angle to the former layer, and then the layers are joined together with wooden pins glued in the holes perpendicular to the plank surface, and then the next layer is arranged on the resulting upper layer crosswise to it and joined with the layer underneath similarly using the pins glued in the arranged layer and the layer underneath. The operation of placing the next crosswise arranged layer and gluing in the pins was repeated until the wall of required thickness was obtained. After obtaining the wall of required thickness, the wall is cut to the correct size and door and/or window openings are cut out in it, as needed, and the resulting waste is usually used as firewood or processed in choppers into chips used for fabricating pellets, since the separation of the bonded layers of planks and recovery of single planks is technically impossible.

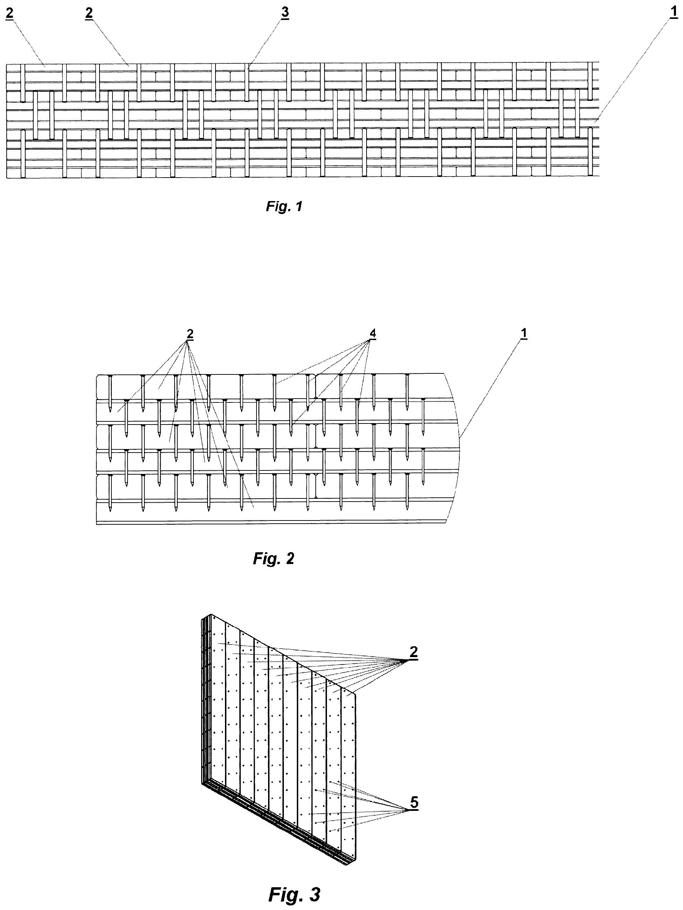

This method has been illustrated in Fig. 1, which shows the sectional view of the stack composed of the plank layers joined together with the pins.

There is also a known method of manufacturing multi-layer wooden walls by making the bottom layer of the planks arranged edgewise, on which the next layer is placed crosswise at right angle to the former layer, and then the layers are joined together with aluminium nails 4 driven perpendicularly to the surface of upper planks, and then the next layer is arranged on the resulting upper layer crosswise to it and joined with the layer underneath similarly using the aluminium nails. The operation of placing the next layer and joining the layers with aluminium nails is repeated until the wall of required thickness is obtained. After obtaining the wall of required thickness, the wall is cut to the correct size or door and/or window openings are cut out in it, as needed, and the resulting chips are treated as waste material, usually used as firewood or processed in choppers into chips, since the separation of the planks joined in such a manner is unprofitable.

This method has been illustrated in Fig. 2, which shows the sectional view of the stack composed of the plank layers joined together with the aluminium nails 4.

There is known from European Patent Application No. EP1321598A2 a composite element. The object of the invention is a composite element, especially as a wall, ceiling or roof element for erecting houses. This element consists of several layers joined together made of arranged next to one another, preferably longitudinal elements, whose direction of arrangement changes layer by layer. The individual layers are joined using fasteners, preferably made of metal.

There is known from French Patent Application No. 2 788 569 a wooden assembly elements with "self-tapping" and "self-bonding screws. This device A or B is designed mainly for joining wooden strips and holding them together, and this is not the only application for the purpose of fabricating beams or other bonded elements, mainly wooden and that can be made of different types of wood.
This device makes it possible to assemble elements, mainly made of wood, screwed or bonded together using wooden screws with or without a "self-tapping" and/or "self-bonding" system.

This device consists of a threaded wooden rod with a protruding head, called a "screw" in design A, or with constant cross-section, called a "threaded bar" in design B. In both instances, a screw joint can be made using a screwdriver, and then a groove should be made in the screw head. The head can be shaped into any polygon to ensure that it remains tightened and, in all the instances, the heads can be fitted or not with a nut.
The device according to the invention is especially intended for assembling wooden elements, bonded or not bonded together, and "behaving" similarly in high temperatures, resistant to oxidation and with a more attractive look that the elements fixed using, for example, pins or nails.

From the European Patent Application No. EP 2 316 624 A2 there is known a multi-layer wooden panel, which contains a core member made of board layers and two external finishing layers made of boards joined at the edges; said layers are made of grooved boards joined at the edges, said board layers of the said core member are joined together by pegs; at least a part of the said pegs penetrate all said board layers at an angle; the said core member boards and the said finishing layers are joined by keyed connections.

From the European Patent Application No. EP 1 745 899A2 there is known a method of manufacturing a multi-layer compound element made up of several layers from 3 to 7 structural elements - in particular of elongated wooden elements resembling planks arranged next to each other, whereby structural elements of at least two adjoining layers are preferably arranged in different directions, and joining points are provided with pins - consisting in pressing down the layers arranged on a working surface, at least in the area of the joining point, to the working area, drilling a hole in the joining point and placing a pin in the drilled hole, whereby proper pressure needs to be maintained while drilling and inserting the pin.

The purpose of the invention is to develop the method of manufacturing the multi-layer wooden wall of planks arranged crosswise at right angles to one another in alternate layers that form a stack, used for making walls with openings for windows and doors and walls without openings used for building houses, where the pins can easily be removed from the resulting waste material and reclaimed planks can be reused to manufacture a new wall.

The invention is a method of manufacturing a multi-layer wooden wall according to claim 1.

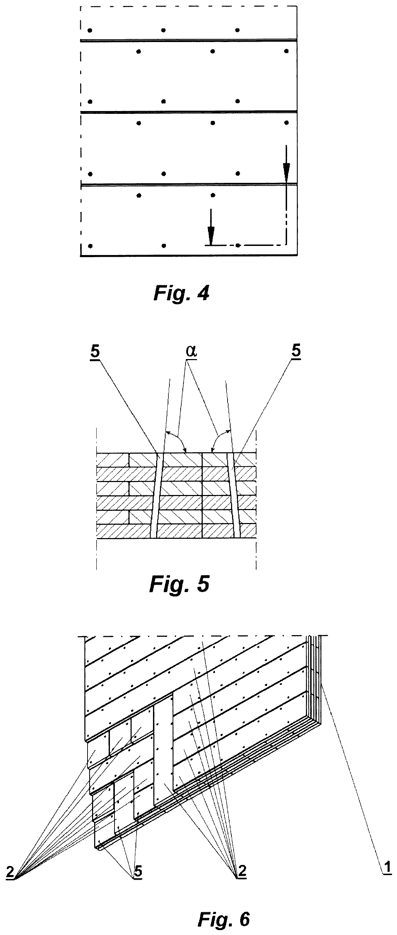

The wall manufactured according to the invention has been illustrated in Fig. 3 which shows a top axonometric view of the stack composed of the plank layers joined together with the pins driven through them, Fig. 4 shows a top view of part of a corner of the wall made of the planks joined with the pins with the indicated cutting plane across the pins, Fig. 5 shows the sectional view of part of the wall made of the plank layers joined together with the wooden pins driven at an angle, and Fig. 6 shows an axonometric view of part of the wall with parts of the planks removed.

**Example 1.** The planks **2** of identical width and identical length are arranged on the even surface of the base into the stack **1** composed of 5 layers arranged parallel to one another along their longer sides, where each subsequent layer of the planks **2** is arranged crosswise at right angles to one another in the alternate layers of the planks **2** arranged parallel to one another along their longer sides, after which the stack of the planks **2** is stabilised on the sides and from the top by exerting pressure of 200 kg/m² on it by means of pressure clamps, which is transferred down to the base of the stack **1** so that the individual layers adhere to one another thoroughly and form the wall with the top and bottom layers parallel to one another, after which two holes are made through all the layers of the planks in the stack on the plank width "A" with their axis of symmetry inclined at an angle of 20° to the longitudinal edge of the planks **2** of the stack **1**, and then the pins **5** are driven in the holes, and the stack **1** joined in that manner forming the finished wall is sized to obtain correct thickness and then placed in the storage area.

**Example 2.** The planks **2** of identical width and identical length are arranged on the even surface of the base into the stack **1** composed of 17 layers arranged parallel to one another along their longer sides, where each subsequent layer of the planks **2** is arranged crosswise at right angles in the alternate layers, and then the stack of the planks **2** is stabilised on the sides and from the top by exerting pressure of 600 kg/m² on it by means of pressure clamps, which is transferred down to the base of the stack **1** so that the individual layers adhere to one another thoroughly and form the wall with the top and bottom layers parallel to one another, after which five holes are made through all the layers of the planks **2** in the stack **1** on the plank width "A" with their axes of symmetry inclined at an angle of 45° to the longitudinal edge and 45° to the side edge of the planks **2** in the stack **1**, and then the pins **5** are driven in the holes and the door and window openings are cut out in the stack **1**, after which the finished wall is sized to obtain correct thickness and then placed in the storage area, and the pins **5** from the door and window cut-outs are pushed out in the direction opposite to the pinning direction and the planks **2** reclaimed are reused for arranging the next layered walls by making the stack **1** of the planks **2**, which is subjected again to the process of joining all the layers by drilling diagonal holes and driving in the pins **5**.

## Claims

1. method of manufacturing a multi-layer wooden wall from planks arranged crosswise at right angles to one another in alternate layers consisting of a number of planks of equal width that adhere to one another edgewise along their longer edges which are cut to a same length, arranged into a stack on an even surface of an assembly base, whereby the stack (1) consists of 5 to 17 layers of planks (2), until the wall of required thickness is obtained, whereby the stack of planks is stabilised on the sides and from the top by exerting a pressure of 200 to 600 kg/m² on it by means of pressure clamps, which is transferred to the side walls and base of the stack so that the individual layers adhere to one another thoroughly and form the wall with the top and bottom layers parallel to one another, and then 1 to 5 holes are made through all the layers of the planks (**2**) in a stack (**1**) on a plank width "A" to join each layer, with their axes of symmetry inclined at an angle higher than 0° up to 45° to the longitudinal and/or side edges of a stack (**1**) planks (**2**), and then pins (**5**) are driven in the holes and a stack (**1**) joined in that manner is sized to obtain correct thickness and door and/or window openings are cut out in it, as needed, and pins (**5**) from door and/or window cut-outs are pushed out in the direction opposite to the pinning direction and the planks (**2**) reclaimed are reused for arranging wall layers that form the next stack (**1**), which is again subjected to the process of joining all the layers by drilling the next diagonal holes and driving in pins (**5**), and then the process is repeated until the wall without openings or the wall with the openings is obtained.

## Patentansprüche

1. Ein Verfahren zur Herstellung einer mehrschichtigen Holzwandstruktur aus Brettern, die kreuzweise im rechten Winkel zueinander in abwechselnden Schichten angeordnet sind, die aus mehreren Brettern gleicher Breite bestehen, die seitlich entlang der längeren Kanten, auf die gleiche Länge zugeschnitten, aneinander haften und auf einer ebenen Oberfläche der Montagebasis zu einem Stapel geschichtet sind, wobei der Stapel (1) aus 5 bis 17 Schichten von Brettern (2) besteht, bis eine Wandstruktur der erforderlichen Dicke erhalten wird, wobei der Stapel von Brettern seitlich und von oben durch die Ausübung eines Anpressdrucks von 200 bis 600 kg/m2 mit Druckklemmen stabilisiert wird, die ihn auf die Seitenwände und die Stapelbasis so übertragen, dass die einzelnen Schichten gründlich aneinander haften und eine Wand mit der parallel zueinander angeordneten obersten und untersten Schicht bilden, und dann von 1 bis 5 Löcher in allen Schichten von Brettern (2) im Stapel (1) in der Breite des Brettes "A" gemacht werden, um jede Schicht zu verbinden, mit Symmetrieachsen, die in einem Winkel von mehr als 0° bis 45° zu den Längs- und/oder Seitenkanten des Stapels (1) von Brettern (2) geneigt sind, und dann Stifte (5) in die Löcher eingeführt werden und der auf diese Weise verbundene Stapel (1) so dimensioniert wird, dass eine entsprechende Dicke erhalten wird, und Tür- und/oder Fensteröffnungen in ihm, falls nötig, ausgeschnitten werden, und die Stifte (5) aus Tür- und/oder Fensteröffnungen in eine entgegengesetzten Richtung zu der Richtung der Einführung rausgedrückt werden, und die zurückgewonnenen Bretter (2) für die Bildung der Schichten für den nächsten Stapel (1) wieder eingesetzt werden, der dann wieder dem Prozess der Verbindung aller Schichten durch das Bohren von weiteren diagonalen Löchern und das Einführen von Stiften (5) unterzogen wird, wobei der Prozess wiederholt wird, bis eine fertige Wandstruktur ohne Öffnungen oder eine fertige Wandstruktur mit Öffnungen erhalten wird.

## Revendications

1. Méthode de fabrication d'un mur multi-couche en bois constitué de planches placées transversalement à l'angle droit les unes par rappport aux autres en couches alternatives, constituées d'un rang de planches de la même largeur, jointes le long des bords plus longs, coupées à la même longueur, empilées sur une surface régulière de la base de montage, la pile (1) étant composée de 5 à 17 couches de planches (2), jusqu'à l'obtention d'un mur d'épaisseur demandée, la pile de planches étant stabilisée sur les côtés et par le dessus par la pression de 200 à 600 kg/m² exercée par les plaques de pression sur les faces latérales et sur la base de la pile de telle sorte que les différentes couches soient adjacentes et créent un mur avec une couche supérieure et inférieure parallèles et ensuite on crée 1 à 5 trous dans toutes les couches de planches (2) dans la pile (1) à la largeur de la planche « A » afin de lier chaque couche, les axes de symétrie étant inclinés à l'angle supérieur à 0° jusqu'à 45° par rapport aux bords longitudinaux et/ou latéraux de la pile (1) de planches (2), et ensuite dans les trous on met en place des goupilles (5) et la pile (1) ainsi liée est dimensionnée de manière à obtenir une épaisseur appropriée et en fonction de besoin les ouvertures de portes et/ou de fenêtres y sont réalisées, les goupillles (5) sont repoussés des ouvertures de porte et/ou de fenêtre dans le sens contraire à leur mise en place et les planches (2) récupérées sont réutilisées pour créer des couches de mur constituant une pile (1) suivante qui sera soumise au procès de liaison de toutes les couches par le forage des trous obliques suivants et par la mise en place de goupilles (5), ce procès se reproduit jusqu'à l'obtention d'un mur libre de trous ou jusqu'à l'obtention d'un mur avec des trous.
